# EUROPEAN PATENT SPECIFICATION

(11) **EP 2 600 487 B1**
(45) Date of publication and mention of the grant of the patent: **11.04.2018**
(21) Application number: 11812012.0
(22) Date of filing: 20.07.2011
(51) Int. Cl.: H01M 2/34, H01M 10/42, H01M 10/46, H02J 7/00, H01M 10/48

(54) **SECONDARY-BATTERY CONTROL DEVICE**
STEUERVORRICHTUNG FÜR EINE SEKUNDÄRBATTERIE
DISPOSITIF DE COMMANDE DE BATTERIE SECONDAIRE

(30) Priority: 30.07.2010 JP 2010172342
(43) Date of publication of application: 05.06.2013
(73) Proprietor: Panasonic Intellectual Property Management Co., Ltd., Osaka-shi, Osaka 540-6207 (JP)
(72) Inventor: SARUHASHI, Koichi, Moriguchi-shi Osaka 570-8677 (JP); SHIMAYAMA, Hajime, Moriguchi-shi Osaka 570-8677 (JP); NAKAMURA, Yoshihiro, Moriguchi-shi Osaka 570-8677 (JP)
(74) Representative: Glawe, Delfs, Moll
(86) International application number: PCT/JP2011/004102
(87) International publication number: WO 2012/014410

(56) References cited:
- JP-A- 62 272 831
- JP-A- 2001 333 546
- US-A- 5 898 293
- US-B2- 7 443 140

## Description

### TECHNICAL FIELD

The present invention relates to a control apparatus for controlling the charging and discharging of a battery such as a lithium-ion cell.

### BACKGROUND TECHNOLOGY

Recently, a power storage system that achieves the peak cut (peak shifting) of the electric power consumed is put to practical use. The power storage system, provided with a battery, is a system where the electric power is charged in the battery late in the night and the thus charged electric power is used during the day when the power consumption comes to a peak.

A lithium-ion cell, a nickel-hydrogen cell, a lead cell and the like may be used as the battery. In particular, the lithium-ion cell is lightweight and also characterized by a high capacity and high output power, and is therefore suitable as the battery for the above-described power storage system.

### [Related Art Documents]

### [Patent Documents]

[Patent Document 1] Japanese Unexamined Patent Application Publication No. 2004-319336.

An overdischarge prevention control based on checking whether a remaining capacity ratio of the battery is a first setting ratio or below and whether the voltage of the battery is a first setting voltage or below is disclosed in US 7443140 B2. This document does not disclose to carry out overdischarge prevention control only if also the additional condition is fulfilled that the battery has not been charged for a predetermined setting period.

### DISCLOSURE OF THE INVENTION

### PROBLEMS TO BE SOLVED BY THE INVENTION

The lifespan of the lithium-ion cell varies greatly depending on how it is used. The overdischarge is one factor that shortens the cell/battery life.

The present invention has been made in view of the foregoing circumstances, and a purpose thereof is to provide a technology for suppressing the overdischarge of a battery.

### MEANS FOR SOLVING THE PROBLEMS

A control apparatus for a battery according to the present invention is a control apparatus according to claim 1.

### EFFECT OF THE INVENTION

The present invention suppresses the overdischarge of a battery.

### BRIEF DESCRIPTION OF THE DRAWINGS

FIG. 1 illustrates a structure of a battery according to a first embodiment of the present invention.
FIG. 2 is a flowchart to explain a specific exemplary operation of a control apparatus according to a first embodiment of the present invention.
FIG. 3 is a graph showing a relationship between voltages and RSOC of a lithium-ion cell used in the aforementioned specific example.
FIG. 4 illustrates a structure of a control apparatus of a battery according to a second embodiment of the present invention.
FIG. 5 is a graph showing an exemplary constant-voltage constant-current charging characteristic.
FIG. 6 is a graph showing an exemplary relationship between discharge current and discharge cutoff voltage.

### BEST MODE FOR CARRYING OUT THE INVENTION

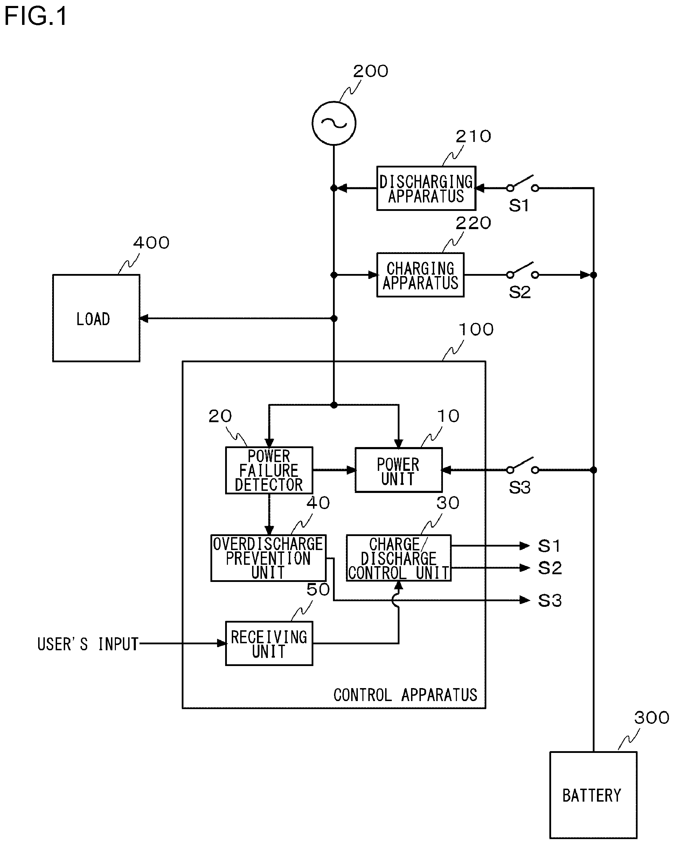

FIG. 1 illustrates a structure of a control apparatus 100 of a battery 300 according to a first embodiment of the present invention. In the present embodiment, a household power storage system is explained as an example. Principally assumed as a load 400 are equipment and devices in households such as lighting equipment, relatively large-size household electrical appliances, audio-visual equipment and personal computer related devices. Assume also herein that the battery 300 uses a lithium-ion cell.

A commercial power supply grid (AC power) 200 is configured so that the electric power can be supplied to the load 400, the battery 300, and the control apparatus 100. Assume, in the present embodiment, that the commercial source voltage is 200 V.

A charging apparatus 220 is an apparatus for charging the electric power into the battery 300 from the commercial power supply grid 200 via a second switching element S2. The charging apparatus 220 principally converts AC power to DC power. Also, the charging apparatus 220 boosts or steps down the commercial voltage as necessary.

A discharging apparatus 210 is an apparatus used to return the electric power, discharged from the battery 300, to a commercial power supply grid system via a first switching element S1. The discharging apparatus 210 principally converts DC power to AC power. Also, the discharging apparatus 210 boosts or steps down the battery voltage as necessary. Though the discharging apparatus 210 and the charging apparatus 220 are drawn separately in FIG. 1, they may be integrated into a single unit.

It is preferable that the first switching element S1 and the second switching element S2 be each configured by a relay compatible with high current. Note that the first switching element S1 and the second switching element S2 may each be configured by a power MOSFET or the like.

The control apparatus 100 controls the charging and discharging of the battery 300. The control apparatus 100 is capable of receiving the supply of the electric power from either one or both of the commercial power supply grid 200 and the battery 300. A detailed description is now given of the control apparatus 100. The control apparatus 100 is comprised of a power unit 10, a power failure detector 20, a charge/discharge control unit 30, an overdischarge prevention unit 40, and a receiving unit 50.

The power unit 10 obtains an operating power of the control apparatus 100 from the commercial power supply grid 200 or from the battery 300 via a third switching element S3. Though the power supplied from the commercial power supply grid 200 is basically used, the power supplied from the battery 300 is used in the event that the power from the commercial power supply grid cannot be used, such as in case of a power outage.

The power failure detector 20 detects the power outage of the commercial power supply grid 200 by detecting the voltage of the commercial power supply grid system. Here, the power failure is not limited to ones for which an electric power company is responsible but it also includes interruption of a circuit breaker operated by a user himself/herself or due to the usage of a device in excess of the contract power.

The charge/discharge control unit 30 performs control such that, in a predetermined charging period of one day, the electric power is charged into the battery 300 from the commercial power supply grid and such that, in a discharging period, which differs from the charging period, the electric power is discharged from the battery 300. For example, control is performed such that the electric power is charged into the battery 300 from the commercial power supply grid 200 in a time period during which the electric power consumed by loads is small and its consumption peak is suppressed, namely the consumption is off its peak (e.g., 23:00 to 7:00). And control is performed such that the electric power is discharged from the battery 300 in a time period during which the electric power consumed by the loads is larger than other periods (the aforementioned period) and the consumption is at its peak or when its peak appears (e.g., 7:00 to 23:00). Hereinbelow, the time period during which the electric power consumption is off at its peak will be referred to as "late-night time period" in this patent specification.

The charge/discharge control unit 30 can charge the electric power into the battery 300 from the commercial power supply grid 200 by controlling the second switching element S2 to ON. The charge/discharge control unit 30 can discharge the electric power from the battery 300 to the commercial power supply grid system by controlling the first switching element S1 to ON.

The receiving unit 50 receives instructions from a user in the form of user inputs. For example, the receiving unit 50 receives a user's instruction to charge the battery 300 from the commercial power supply grid 200 and a user's instruction to discharge the electric power from the battery 300 to the load 400. Also, the receiving unit 50 can receive a user's instruction to set the battery 300 to an automatic mode where the battery 300 is automatically charged to a practically full charging capacity for every late-night time period to such a degree that overcharge does not occur. Note that this automatic charging mode may be set such that the battery 300 is charged up to the level of electric energy expected to cover the next day's consumption, instead of up to the full charging capacity. Note also that the user no longer needs to give an instruction as to the charging once the automatic charging mode is set.

The overdischarge prevention unit 40 performs an overdischarge prevention control such that the electric power is charged into the battery 300 when the following three conditions are met. The three conditions are (1) when the battery 300 has not been charged for a predetermined setting period, (2) when the remaining capacity ratio of the battery 300 is a first setting ratio, which is set to prevent the overdischarge, or below, and (3) when the voltage of the battery 300 is a first setting voltage, which is set to prevent the overdischarge, or below. Here, the setting period may be one day (24 hours). In such a case, the condition on which the overdischarge prevention control is activated is that the automatic charging mode is not set.

The overdischarge prevention unit 40 performs the overdischarge prevention control regardless of the user's instruction received by the receiving unit 50. That is, even if the instruction to charge the battery 300 from the commercial power supply grid 200 and the instruction to enable the automatic charging mode are not received from the user by the receiving unit 50, the overdischarge prevention control will be carried out.

The remaining capacity ratio of the battery 300 is indicated by SOC (State Of Charge). SOC is defined by the ratio of A divided by B, where A is the present charged capacity (absolute quantity in "Ah" (Ampere-hour) and B is the fully charged capacity (absolute quantity in "Ah"). Note that SOC is set for each cell and for each cell/battery maker. Thus, SOC = 0% does not necessarily indicate that the charged capacity is zero. The charged capacity at the time SOC = 0% is a value so set by each battery maker that the overdischarge (i.e., a discharge that falls below a discharge cutoff voltage) does not occur, on the assumption that the battery 300 is used within a recommended range of ambient temperature and discharge current value. Thus, if the battery 300 continues to discharge even though SOC becomes less than 0% and if SOC exceeds a certain critical value, the discharge current value will increase rapidly and this will contribute to shortening the battery life.

Since it is difficult to directly detect SOC, ROSC (Relative State of Charge), which is a value indirectly estimated from the discharge current value and the like, is used in this patent specification.

When the battery 300 has been charged for a predetermined setting period (e.g., for an hour), when RSOC of the battery 300 exceeds a second setting ratio, which is set to stop the charging, or when the voltage of the battery 300 exceeds a second setting voltage, which is set to stop the charging, the overdischarge prevention unit 40 stops the overdischarge prevention control.

Note here that the second setting ratio is larger than the first setting ratio and that the second setting ratio is preferably larger than 0%. As such, the power can still be supplied for a while even though the battery 300 is discharged again. It is also preferable that the second setting voltage be larger than a voltage at which RSOC indicates 0%. As such, the power can still be supplied for a while even though the battery 300 is discharged again.

When the supply of the electric power to the control apparatus 100 from the commercial power supply grid 200 stops (i.e., when the power failure occurs) and when RSOC of the battery 300 is the first setting ratio or below and when the voltage of the battery 300 is a third setting voltage, which is lower than the first setting voltage, or below, the overdischarge prevention unit 40 shuts off the control apparatus 100 and the battery 300.

More specifically, the overdischarge prevention unit 40 turns off the third switching element S3 and thereby electrically shuts off the control apparatus 100 and the battery 300. The overdischarge prevention unit 40 also turns off the first switching element S1 and the second switching element S2 after a predetermined setting time duration has elapsed after the power failure is detected. Unlike the first switching element S1 and the second switching element S2, no high current flows through the third switching element S3. Thus, no relay needs to be implemented and an ordinary MOSFET is used as the third switching element S3.

The third setting voltage used in the case of power failure is set to a value lower than the aforementioned first setting voltage used to determine the aforementioned overdischarge prevention control, because the following viewpoint is taken into consideration. That is, though only a small current flows to the control apparatus 100 from the battery 300 when the power failure occurs, a certain current flows to the load 400 from the battery 300 when the aforementioned overdischarge prevention control is activated. Thus, the discharge current value in the former situation is smaller than that in the latter situation, so that time required to reach the discharge cutoff voltage in the former situation is longer than that in the latter situation. While it takes to reach the discharge cutoff voltage, the system may possibly recover from the power failure.

An specific operation of the control apparatus 100 according to the first embodiment is described hereunder. Assume, in this specific example, that the battery 300 is formed such that 65 lithium-ion cells are connected in series with one another.

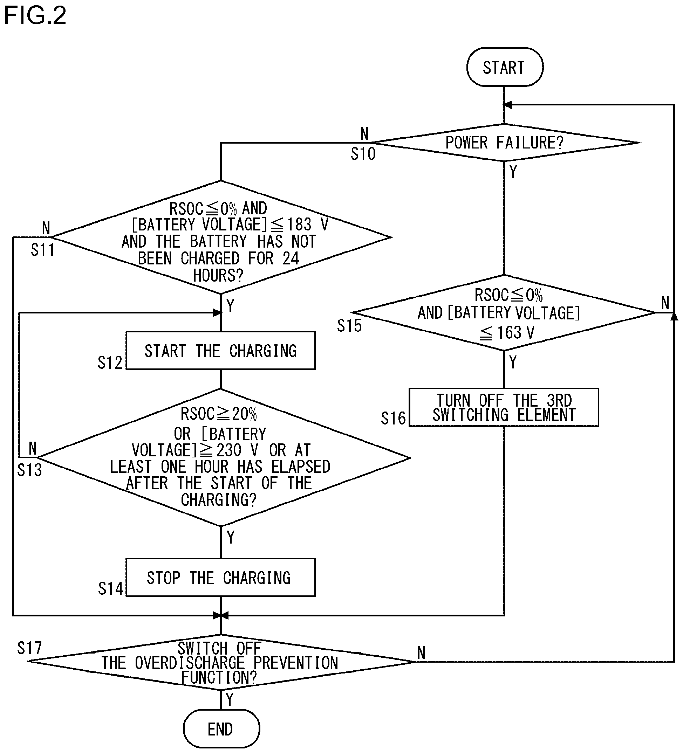

FIG. 2 is a flowchart to explain a specific exemplary operation of the control apparatus 100 according to the first embodiment of the present invention. The overdischarge prevention unit 40 first determines if power failure has occurred (S10). If power failure does not occur (N of S10), the overdischarge prevention unit 40 determines if RSOC is 0% or below and if the voltage value of the battery 300 is 183 V or below and the battery 300 has not been charged for 24 hours (S11).

If these conditions are met (Y of S11), the overdischarge prevention unit 40 will start the overdischarge prevention control, namely start charging the electric power (S12). For example, control is performed such that a charging current of 0.15 C is delivered to the battery 300. Also, a precharged current may be used. In this case, the aforementioned overdischarge prevention control may be started at once or the start of the overdischarge prevention control may be postponed until the late-night time period begins. In the latter case, RSOC and the voltage value of the battery 300 according to the condition of Step S11 are set in consideration of the waiting time from when the conditions of Step 11 have been met until when the late-night time period begins.

If the conditions of Steps S11 are not met (N of S11), the procedure will proceed to Step S17.

After the overdischarge prevention control has been performed, the overdischarge prevention unit 40 determines if RSOC is 20% or above, if the voltage value of the battery 300 is 230 V or above or if at least one hour has elapsed after the start of the charging (S13). While none of these conditions is met (N of S13), the procedure goes to Step S12 and the overdischarge prevention control is continued. If any one of the conditions is met (Y of S13), the overdischarge prevention unit 40 will stop the overdischarge prevention control, namely stop charging the electric power (S14). Then the procedure will proceed to Step S17.

If power failure has occurred in Step S10 (Y of S10), the overdischarge prevention unit 40 determines if RSOC is 0% or below and if the voltage value of the battery 300 is 163 V or below (S15). If these conditions are met (Y of S15), the overdischarge prevention unit 40 will turn off the third switching element S3 and shut off the control apparatus 100 and the secondary 300 (S16). If these conditions are not met (N of S15), the procedure will proceed to Step S10.

In Step S17, the overdischarge prevention unit 40 determines if the overdischarge prevention function according to the present embodiment is turned off by a user's input. If the overdischarge prevention function is turned off (Y of S17), the overdischarge prevention processing will be stopped. If the overdischarge prevention function is not turned off (N of S17), the procedure will go to Step S10.

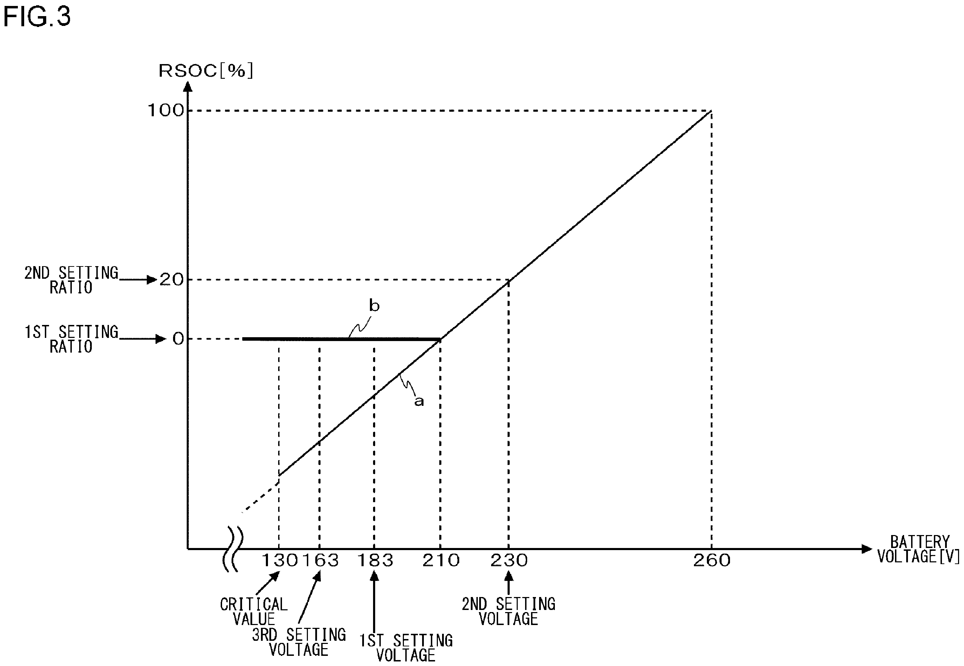

FIG. 3 is a graph showing a relationship between the voltages and RSOC of a lithium-ion cell used in the above-described specific example. The horizontal axis indicates the battery voltage [V], whereas the vertical axis indicates RSOC [%]. Even though RSOC is 0% or below, the battery voltage drops (see a of FIG. 3). Shown in the above-described specific example is a case where the first setting voltage, the second setting voltage and the third setting voltage are set respectively to 183 V, 230 V, and 163 V, and the first setting ratio and the second setting ratio are set respectively to 0% and 20%. These first to third setting voltages are all set to the voltage values larger than the critical value (i.e., 130 V in FIG. 3).

Also, there are cases where RSOC is all set to 0% when the first setting ratio is less than 0% (see **b** of FIG. 3). In such a case, too, the first setting ratio is set to 0%, so that the overdischarge can be reliably prevented. The range of battery voltages corresponding to RSOC of 0% to 10% is set by each battery maker in consideration of its battery characteristic.

By employing the first embodiment as described above, the overdischarge of the battery 300 can be suppressed. In particular, the overdischage caused when the electric power is not charged into the battery 300 for a long period of time due to a man-made mistake can be effectively prevented. For the time period during which its peak consumption is suppressed, the charging is done using electricity in the late-night time period when the electricity rate is low, if a discounted electricity rate can be applied to the time period. This can suppress the overdischarge of the battery 300 while a rise in electricity bill is suppressed. As a result, the performance degradation of the battery 300 can be prevented and the shortening of the battery life can be suppressed. Also, this can effectively handle a pattern in which the charged electric power of the battery 300 gradually drops because of the power being supplied to the control apparatus 100 from the battery 300 after the power failure.

The present invention has been described by referring to the first embodiment and such description is for illustrative purposes only. It is understood by those skilled in the art that any arbitrary combinations of the constituting elements and processes could be developed as modifications and that such modifications are also within the scope of the present invention.

The condition that the system voltage of the commercial power supply grid 200 is 150 V or above may be added, as an AND condition, to the conditions of Step S11 of FIG. 3. If the system voltage thereof falls below 150 V, it is preferable that another overdischarge prevention control be performed instead of the charging from the commercial power supply grid 200.

In Step S13 of FIG. 3, the following (i) to (iii) are set as OR conditions, where (i) is that RSOC is 20% or above, (ii) is that the voltage value of the battery 300 is 230 V or above, and (iii) is that at least one hour has elapsed after the start of the charging. As a modification, all of three conditions (i) to (iii) or any two of them may be set as AND conditions. Also, whether RSOC is 20% or above (this corresponds to the second setting ratio) or not and whether the voltage value of the battery 300 is 230 V or above (this corresponds to the second setting voltage) or not are detected and if at least one of these two conditions of second setting ratio and the second setting voltage is met, it may be determined that the aforementioned overdischarge prevention control be stopped.

The condition that the system voltage of the commercial power supply grid 200 is 100 V or below may be added, as an OR condition, to the conditions of Step S15 of FIG. 3. Addition of this new condition treats the condition, where the system voltage is 100 V or blow, the same way as the aforementioned stopped state.

In the above-described embodiment, a lithium-ion cell is assumed as the battery 300. However, other secondary cells such as a nickel-hydrogen cell and a lead cell also require some measure to prevent the overdischarge. The control employed in the present embodiment is applicable to such other cells.

Though a household power storage system is assumed also in the above-described embodiment, the present embodiment is applicable to the power storage system installed in premises such as a convenience store and a shopping mall and in facilities such as an office and a factory.

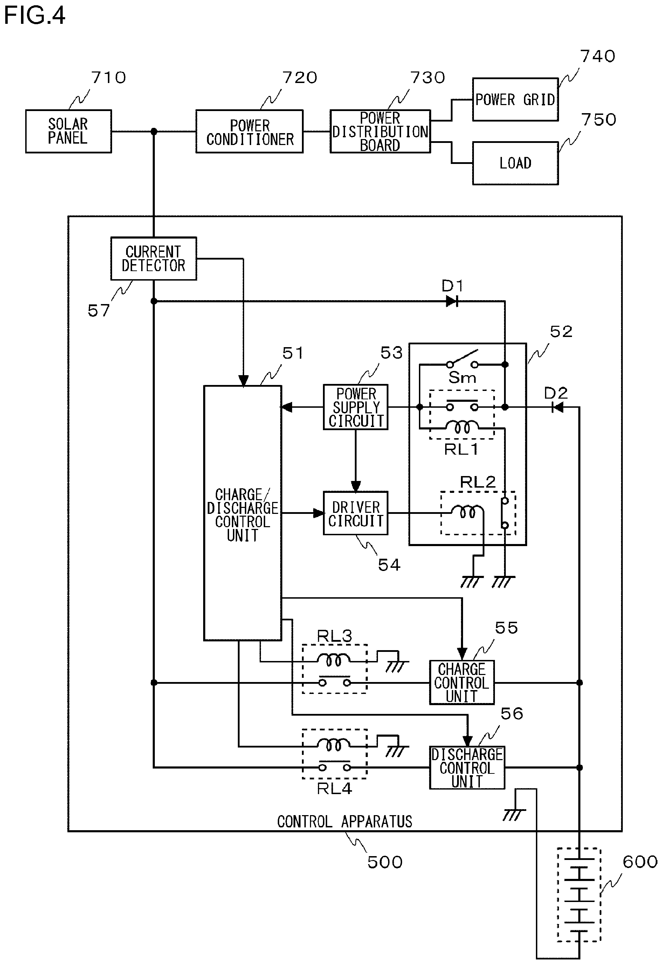

A second embodiment is now described. FIG. 4 illustrates a structure of a control apparatus 500 of a battery 600 according to the second embodiment of the present invention. In the second embodiment, too, a household power storage system is explained as an example. Similar to the first embodiment, principally assumed as a load 750 are equipment and devices in households such as lighting equipment, relatively large-size household electrical appliances, audio-visual equipment and personal computer related devices. In the second embodiment, principally assumed is a case where the electricity generated by a solar panel 710 is charged into the battery 600.

A power conditioner 720 includes a DC-AC converter that converts DC power to AC power. The power conditioner 720 converts DC power generated by the solar panel 710 into AC power, and adjusts the state of the AC power to a state where the AC power is usable as the power supply of the load 750. A power distribution board (panel board) 730 overlays the AC power, outputted from the power conditioner 720, with the internal wiring where the electric power is fed to the load 750 from a power grid 740. If the DC-AC converter included in the power conditioner 720 is a bi-directional DC-AC converter, the commercial power supplied from the power grid 740 can be charged into the battery 600 as well.

In the second embodiment, a description is given of an example where a lead storage cell (e.g., deep-cycle lead storage cell) is used as the battery 600. The main purpose of the power storage system according to the second embodiment is not to achieve the leveling of the usage of commercial power used as with the first embodiment but to ensure the provision of an emergency power supply in the event of power failure and the like. Thus, the lead storage cell that is available at comparatively low cost is used for the battery 600.

In the second embodiment, a description is given of an example where four lead storage cell modules each of which contains six cells are connected in series with each other. The nominal voltage of each lead storage cell used in the second embodiment is 12 V. Since four of them connected in series are used, the total nominal voltage of the lead storage cell modules is 48 V. Also, the capacity of the lead storage module is 105 Ah = 1C.

The control apparatus 500 includes a charge/discharge control unit 51, a self-holding type switching unit 52, a power supply circuit 53, a driver circuit 54, a charge control unit 55, a discharge control unit 56, a current detector 57, a third relay RL3, a fourth relay RL4, a first diode D1, and a second diode D2.

The control apparatus 500, which controls the charging and discharging of the battery 600, is connected to a current path (hereinafter referred to as "external current path") that connects the solar panel 710 to the power conditioner 720. External connection terminals of the control apparatus 500 are connected to the external current path. The current detector 57 detects the current flowing through a current path (hereinafter referred to as "internal current path"), which are provided inside the control apparatus and are a connected to the external connection terminals, and outputs the thus detected current to the charge/discharge control unit 51.

The internal current path is formed of a first switch power path connecting the external current path to the self-holding type switching unit 52, a second switch power path connecting the battery 600 to the self-holding type switching unit 52, a charging path used to charge the electricity into the battery 600 from the external current path, and a discharging path used to discharge the electricity from the battery 600 to the external current path.

The first diode D1 for use with backflow prevention is inserted in series into the first switch power path. The second diode D2 for use with backflow prevention is inserted in series into the second switch power path, too. The third relay RL3 and the charge control unit 55 are inserted in series into the charging path. The fourth relay RL4 and the discharge control unit 56 are inserted in series into the discharging path.

The charge/discharge control unit 51 controls the charging and discharging of the battery 600 by controlling the third relay RL3, the charge control unit 55, the fourth relay RL4 and the discharge control unit 56. Also, the charge/discharge control unit 51 controls a second relay RL2 by controlling the driver circuit 54, so that the shutoff of the self-holding type switching unit 52 can be controlled.

The self-holding type switching unit 52 includes an automatic return type switch Sm, a first relay RL1, and a second relay RL2. The first relay RL1 includes a magnetizing coil and a normally-open contact. The second relay RL2 includes a magnetizing coil and a normally-closed contact.

The automatic return type switch Sm and the normally-open contact of the first relay RL1 are connected in parallel with each other. An input terminal of the parallel circuit is connected to the first switch power path and the second switch power path. An output terminal of the parallel circuit is connected to an input terminal of the power supply circuit 53 and an input terminal of the magnetizing coil of the first relay RL1. An output terminal of the magnetizing coil of the first relay RL1 is connected to an input terminal of the normally-closed contact of the second relay RL2. An output terminal of the normally-closed contact of the second relay RL2 is grounded. An input terminal of the magnetizing coil of the second relay RL2 is connected to the driver circuit 54. An output terminal of the magnetizing coil of the second relay RL2 is grounded.

The automatic return type switch Sm is an automatic return type switch that is operated manually. And if a user wishes to activate the storage system, he/she will carry out an operation to turn on the automatic return type switch Sm. As the automatic return type switch Sm is turned on through the operation, the current flows through the magnetizing coil of the first relay RL1 from the first switch power path or the second power switch path. Then the excitation energy generated at the magnetizing coil of the first relay RL1 closes the normally-open contact of the first relay RL1.

As a result, the voltage generated by the solar panel 710 or the voltage stored in the battery 600 is supplied to the power supply circuit 53 via the first switch power path or the second switch power path. Then the automatic return type switch Sm is automatically turned off but the normally-open contact of the first relay RL1 remains closed. Note that while no electricity is generated by the solar panel 710 during night for example, the voltage is supplied to the power supply circuit 53 from the battery 600 only.

The power supply circuit 53, which includes a DC-DC converter and other components, adjusts the supplied voltage to the operating voltage of the charge/discharge control unit 51 and the operating voltage of the driver circuit 54 and thereby supplies the adjusted voltages to the charge/discharge control unit 51 and the driver circuit 54, respectively.

When the terminal voltage of the battery 600 becomes a predetermined cutoff voltage or below, the charge/discharge control unit 51 starts the driver circuit 54 and thereby energizes the magnetizing coil of the second relay RL2. The excitation energy generated at the magnetizing coil of the second relay RL2 opens the normally-closed contact of the second relay RL2. This stops the energizing of the magnetizing coil of the first relay RL1. As a result, the normally-open contact of the first relay RL1 is opened and the supply of voltage to the power supply circuit 53 is shut off. A specific example of this shutoff processing will be discussed later.

Basically, the charge/discharge control unit 51 controls the third relay RL3 and the charge control unit 55 in a manner such that when electric power is generated by the solar panel 710, part of this electric power generated by the solar panel 710 is charged into the battery 600. When charging the electric power, the charge/discharge control unit 51 energizes the magnetizing coil of the third relay RL3 by activating a not-shown driver circuit. The excitation energy generated at the magnetizing coil of the third relay RL3 closes the normally-open contact of the third relay RL3, thereby forming the charging path.

Upon receipt of an instruction to charge the electricity from the charge/discharge control unit 51, the charge control unit 55 starts the charging with an upper limit of the charging power and with a maximum constant-current value at which the terminal voltage of the battery 600 does not exceed an upper-limit voltage. In the second embodiment, the maximum constant-current charge value is 0.2 C = (105 A × 0.2), the upper limit of the charging power is 1 kW ≈ (21 A × 48 V), and the upper-limit voltage is 58. 8 V = 14.7 V × 4, for instance. 14.7 V, which is a value obtained when 12 V is increased by 25%, is a value recommended by a lead storage cell maker when a lead storage cell is to be fully charged. Note that the terminal voltage of the battery 600 can be measured by a not-shown voltmeter.

When the output power of the solar panel 710 is 2 kW or below, the charge control unit 55 may lower the maximum constant-current charge value to 0.1 C or control may be performed such that no charging is done in the first place. When the output power of the solar panel 710 is low, control is performed such that the output power is preferentially used for the load 750 instead of for the charging. If the maximum constant-current charge value is lowered to 0.1 C, the upper limit of the charging power will be lowered to 500 W, too. In this manner, the upper limit of the power set when the power is to be charged into the battery 600 is selectable from among a plurality of values.

As the terminal voltage of the battery 600 reaches the upper-limit voltage (e.g., 58.8 V in the present embodiment), the charge control unit 55 switches the constant-current charging to the constant-voltage charging. Since the lead storage cell self-discharges itself, the charge control unit 55 continues to charge the electricity without detecting the value at the full charge.

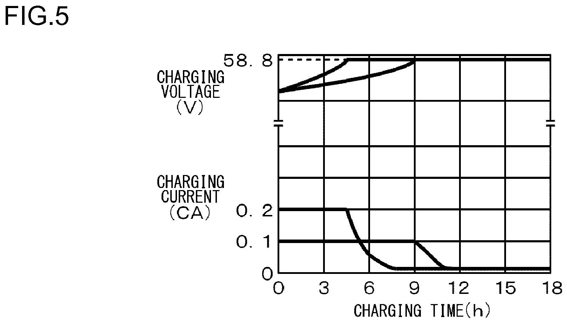

FIG. 5 is a graph showing an exemplary constant-voltage constant-current charging characteristic. FIG. 5 illustrates a charging method where when the constant-current charging is carried out at 0.1 C, the battery 600 reaches 58.8 V after 9 hours and, from then on, the charging is switched to the constant-voltage charging. FIG. 5 also illustrates a charging method where when the constant-current charging is carried out at 0.2 C, it reaches 58.8 V after 4.5 hours and thereafter the charging is switched to the constant-voltage charging.

As soon as, for example, a power failure is detected or the user instructs the start of the discharging, the charge/discharge control unit 51 controls the fourth relay RL4 and the discharge control unit 56 such that the electric power stored in the battery 600 is discharged to the external current path. When charging the electric power, the charge/discharge control unit 51 energizes the magnetizing coil of the fourth relay RL4 by activating a not-shown driver circuit. The excitation energy generated at the magnetizing coil of the fourth relay RL4 closes the normally-open contact of the fourth relay RL4, thereby forming the discharging path.

Assume, in the present embodiment, that the discharge current is 0.2 C. The discharge control unit 56 includes a booster circuit that boosts the discharge voltage of the battery 600 to a predetermined boosted voltage (e.g., 300 V) and then supplies the boosted voltage to the external current path. If a discharge power, which is defined to be a product of the boosted voltage and the discharge current, exceeds a predetermined upper-limit power (e.g., 1 kW in the present embodiment), the discharge control unit 56 lowers the step-up ratio of the booster circuit such that the boosted voltage becomes the predetermined upper-limit power or less. The charge/discharge control unit 51 can obtain the power value of the external current path from a not-shown wattmeter, and the charge/discharge control unit 51 conveys the power value to the discharge control unit 56.

As soon as, for example, the blackout is over or the user instructs the stop of the discharging, the charge/discharge control unit 51 controls the fourth relay RL4 and the discharge control unit 56 such that the discharging of the electricity from the battery 600 be stopped. Also, if a predetermined stoppage condition is met, the charge/discharge control unit 51 will cancel the self-holding function of the self-holding type switching unit 52 and stop the supply of electricity to the supply circuit 53. Thus, not only the discharging of electricity to the external current path but also the supply thereof to the charge/discharge control unit 51 via the power supply circuit 53 is stopped.

The predetermined stoppage condition is a condition in which the terminal voltage of the battery 600 becomes a predetermined cutoff voltage or below. In the present embodiment, a voltage where an adjustment described later is added to the discharge cutoff voltage is set as the predetermined cutoff voltage.

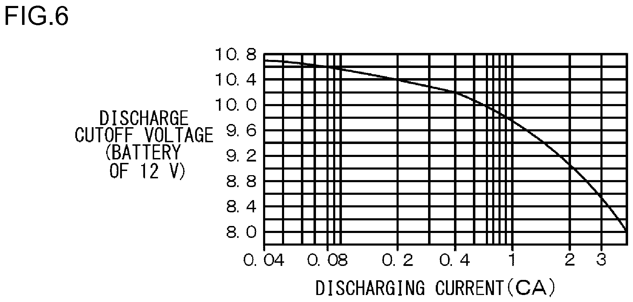

FIG. 6 is a graph showing an exemplary relationship between the discharge current and the discharge cutoff voltage. As shown in FIG. 6, the discharge cutoff voltage of the lead storage cell becomes lower as the discharge current becomes larger. The discharge cutoff voltage of the 12 V lead storage cell relative to the discharge current shown in FIG. 6 indicates values recommended by a lead storage cell maker. For example, the discharge cutoff voltage is 10.4 V when the discharge current is 0.2 C. Since four lead storage cell modules are connected in series in the present embodiment, the total discharge cutoff voltage is 41.6 V.

In the present embodiment, the following adjustment is added to the discharge cutoff voltage. That is, though the discharge cutoff voltage when the discharge current is 0.2 C is 10.4 V, the cutoff voltage in this case is set to 10.56 V = ((12(V)-10.4(V))×0.1+10.4(V)). In other words, 10% of the difference between the nominal voltage and the discharge cutoff voltage is added to the discharge cutoff voltage, and the resulting value is set as the cutoff voltage (10.56 V). Since four lead storage cell modules are connected in series in the present embodiment, the total cutoff voltage is 42.24 V.

Similarly, the discharge cutoff voltage is 10.2 V when the discharge current is 0.4 C, and therefore the total discharge cutoff voltage is 40.8 V. In this case, the cutoff voltage per cell module is 10.38 V and the total cutoff voltage is 41.52 V. Also, the discharge cutoff voltage is 10.6 V when the discharge current is 0.08 C, and therefore the total discharge cutoff voltage is 42.4 V. In this case, the cutoff voltage per cell module is 10. 74 V and the total cutoff voltage is 42.96 V.

The full-charged power of the battery 600 according to the present embodiment is 5 kW. However, the fourth relay RL4 and the discharge control unit 56 may be controlled in a manner such that if the remaining amount of the battery 600 falls below a predetermined ratio (e.g., 10% at 0.5 kW in the present embodiment), the discharging of electricity from the battery 600 will be stopped. In so doing, the amount of discharge power may be measured as the product of ([discharge current]x48(V)) or the boosted voltage boosted by the discharge control unit 56 and the current detected by the current detector 57.

By employing the second embodiment as described above, when the terminal voltage of the battery 600 becomes a predetermined cutoff voltage or below or when the remaining amount of the battery 600 becomes a predetermined ratio or below, the charge/discharge control unit 51 activates the driver circuit 54 to turn off the self-holding type switching unit 52 and thereby the overdischarge of the battery 600 can be suppressed. That is, the voltage at the battery 600 is used as the power source of the charge/discharge control unit 51 via the self-holding type switching unit 52 and the power supply circuit 53; but if the above conditions are met, the self-holding type switching unit 52 is turned off and thereby the overdischarge of the battery 600 on account of the power consumed by the charge/discharge control unit 51 can be suppressed. Also, provision of the automatic return type switch Sm in the self-holding type switching unit 52 enables the user to manually restart the control apparatus 500 if he/she wishes to restart it.

The present invention has been described by referring to the second embodiment and such description is for illustrative purposes only. It is understood by those skilled in the art that any arbitrary combinations of the constituting elements and processes could be developed as modifications and that such modifications are also within the scope of the present invention.

For example, other switching elements such as power MOSFETs may be used for the third relay RL3 and the fourth relay RL4. Also, the above-described specific values are merely exemplary and should not be considered as limiting.

### DESCRIPTION OF THE REFERENCE NUMERALS

100 Control apparatus
10 Power unit
20 Power failure detector
30 Charge/discharge control unit
40 Overdischarge prevention unit
50 Receiving unit
200 Commercial power supply grid
210 Discharging apparatus
220 Charging apparatus
300 battery
400 Load
S1 First switching element
S2 Second switching element
S3 Third switching element
500 Control apparatus
51 Charge/discharge control unit
52 Self-holding type switching unit
53 Power supply circuit
54 Driver circuit
55 Charge control circuit
56 Discharge control circuit
57 Current detector
Sm Automatic return type switch
RL1 First relay
RL2 Second relay
RL3 Third relay
RL4 Fourth relay
D1 First diode
D2 Second diode
600 battery
710 Solar panel
720 Power conditioner
730 Power distribution board
740 Power grid
750 Load

### INDUSTRIAL APPLICABILITY

The present invention is applicable to the control of the charging and discharging of a battery.

## Claims

1. A control apparatus (100), for controlling the charging and discharging of a battery (300), the control apparatus including a power failure detector (20) configured to detect a power outage of a commercial power supply, and an overdischarge prevention unit (40) configured to perform an overdischarge prevention control such that, if power failure does not occur, electric power is charged into the battery (300) when the battery (300) has not been charged for a predetermined setting period and a remaining capacity ratio of the battery (300) is a first setting ratio or below and the voltage of the battery (300) is a first setting voltage or below.

2. A control apparatus (100), for controlling the charging and discharging of a battery (300), according to claim 1, wherein the setting period is one day,
the control apparatus (100) further including a charge-discharge control unit (30) configured to perform control such that, in a predetermined charging period of the one day, an electric power is charged into the battery (300) from a commercial power supply grid (200) and such that, in a discharging period, which differs from the charging period, of the one day, the electric power is discharged from the battery (300).

3. A control apparatus (100), for controlling the charging and discharging of a battery (300), according to claim 1 or claim 2, wherein, when the battery (300) has been charged for a predetermined setting time duration, when the remaining capacity ratio of the battery (300) exceeds a second setting ratio that is larger than the first setting ratio or when the voltage of the battery (300) exceeds a second setting voltage that is higher than the first setting voltage, the overdischarge prevention unit (40) stops the overdischarge prevention control.

4. A control apparatus (100), for controlling the charging and discharging of a battery (300), according to any one of claim 1 to claim 3, wherein the control apparatus (100) is capable of receiving supply of the electric power from either one or both of the commercial power supply grid (200) and the battery (300), and
wherein, when the supply of the electric power to the control apparatus (100) from the commercial power supply grid (200) stops and when the remaining capacity ratio of the battery (300) is the first setting ratio or below and when the voltage of the battery (300) is a third setting voltage, which is lower than the first setting voltage, or below, the overdischarge prevention unit (40) shuts off the control apparatus (100) and the battery (300).

5. A control apparatus (100), for controlling the charging and discharging of a battery (300), according to any one of claim 1 to claim 4, further including a receiving unit (50) configured to receive a user's instruction to charge the battery (300),
wherein the overdischarge prevention unit (40) performs the overdischarge prevention control regardless of the user's instruction received by the receiving unit (50).

6. A control apparatus (100), for controlling the charging and discharging of a battery (300), according to any one of claim 1 to claim 5, wherein the battery (300) is a lithium-ion cell.

## Patentansprüche

1. Steuervorrichtung (100) zum Steuern des Ladens und Entladens einer Batterie (300), wobei die Steuervorrichtung einen Stromausfalldetektor (20), der zum Erfassen eines Stromausfalls einer kommerziellen Stromversorgung konfiguriert ist, und eine Überentladungsverhinderungseinheit (40) umfasst, die zum Durchführen einer Überentladungsverhinderungssteuerung konfiguriert ist, sodass, falls kein Stromausfall auftritt, die Batterie (300) mit elektrischer Energie geladen wird, wenn die Batterie (300) für eine voreingestellte Einstellungszeitdauer nicht geladen worden ist und ein verbleibendes Kapazitätsverhältnis der Batterie (300) ein erstes Einstellungsverhältnis oder niedriger ist und die Spannung der Batterie (300) eine erste Einstellungsspannung oder niedriger ist.

2. Steuervorrichtung (100) zum Steuern des Ladens und Entladens einer Batterie (300) gemäß Anspruch 1, wobei
die Einstellungszeitdauer ein Tag ist,
die Steuervorrichtung (100) weiter eine Lade-Entlade-Steuerungseinheit (30) einschließt, die zum Durchführen einer solchen Steuerung konfiguriert ist, dass, in einer vorgegebenen Ladezeitdauer des einen Tages, die Batterie (300) mit elektrischer Energie aus einem kommerziellen Stromversorgungsnetz (200) geladen wird und dass, in einem Entladezeitraum, der sich von dem Ladezeitraum des einen Tages unterscheidet, die elektrische Energie aus der Batterie (300) entladen wird.

3. Steuervorrichtung (100) zum Steuern des Ladens und Entladens einer Batterie (300) gemäß Anspruch 1 oder 2,
wobei, wenn die Batterie (300) für eine vorbestimmte Einstellungszeitdauer geladen worden ist, wenn das verbleibende Kapazitätsverhältnis der Batterie (300) ein zweites Einstellungsverhältnis überschreitet, das größer ist als das erste Einstellungsverhältnis, oder wenn die Spannung der Batterie (300) eine zweite Einstellungsspannung überschreitet, die höher ist als die erste Einstellungsspannung, die Überentladungsverhinderungseinheit (40) die Überentladungsverhinderungssteuerung beendet.

4. Steuervorrichtung (100) zum Steuern des Ladens und Entladens einer Batterie (300) gemäß einem der Ansprüche 1 bis 3, wobei die Steuervorrichtung (100) fähig ist, die Zufuhr der elektrischen Energie von entweder einem oder beiden des kommerziellen Stromversorgungsnetzes (200) und der Batterie (300) zu empfangen und
wobei, wenn die Zufuhr der elektrischen Energie zu der Steuervorrichtung (100) aus dem kommerziellen Stromversorgungsnetz (200) endet und wenn das verbleibende Kapazitätsverhältnis der Batterie (300) das erste Einstellungsverhältnis oder niedriger ist und wenn die Spannung der Batterie (300) eine dritte Einstellungsspannung ist, die niedriger als die erste Einstellungsspannung ist, oder darunter, die Überentladungsverhinderungseinheit (40) die Steuervorrichtung (100) und die Batterie (300) abschaltet.

5. Steuervorrichtung (100) zum Steuern des Ladens und Entladens einer Batterie (300) gemäß einem der Ansprüche 1 bis 4, die weiter eine Empfangseinheit (50) einschließt, die zum Empfangen einer Benutzeranweisung zum Laden der Batterie (300) konfiguriert ist, wobei die Überentladungsverhinderungseinheit (40) die Überentladungsverhinderungssteuerung ungeachtet der Benutzeranweisung, die durch die Empfangseinheit (50) empfangen wird, durchführt.

6. Steuervorrichtung (100) zum Steuern des Ladens und Entladens einer Batterie (300) gemäß einem der Ansprüche 1 bis 5, wobei die Batterie (300) eine Lithiumionenzelle ist.

## Revendications

1. Appareil de commande (100), permettant de commander la charge et la décharge d'une batterie (300), l'appareil de commande comportant un détecteur de panne de courant (20) configuré pour détecter une coupure de courant d'une alimentation électrique commerciale, et une unité d'évitement de décharge excessive (40) configurée pour effectuer une commande d'évitement de décharge excessive de sorte que, en l'absence d'une panne de courant, une puissance électrique soit chargée dans la batterie (300) lorsque la batterie (300) n'a pas été chargée pendant une période de réglage prédéfinie et un taux de capacité restante de la batterie (300) est inférieur ou égal à un premier taux de réglage ou la tension de la batterie (300) est inférieure ou égale à une première tension de réglage.

2. Appareil de commande (100), permettant de commander la charge et la décharge d'une batterie (300), selon la revendication 1, dans lequel la période de réglage est d'un jour,
l'appareil de commande (100) comportant en outre une unité de commande de charge-décharge (30) configurée pour effectuer une commande de sorte que, dans une période de charge prédéfinie du jour, une puissance électrique soit chargée dans la batterie (300) à partir d'un réseau d'alimentation électrique commercial (200) et de sorte que, dans une période de décharge, différente de la période de charge, du jour, la puissance électrique soit déchargée de la batterie (300).

3. Appareil de commande (100), permettant de commander la charge et la décharge d'une batterie (300), selon la revendication 1 ou la revendication 2, dans lequel, lorsque la batterie (300) a été chargée pendant une durée de réglage prédéfinie, lorsque le taux de capacité restante de la batterie (300) dépasse un deuxième taux de réglage supérieur au premier taux de réglage ou lorsque la tension de la batterie (300) dépasse une deuxième tension de réglage plus élevée que la première tension de réglage, l'unité d'évitement de décharge excessive (40) interrompt la commande d'évitement de décharge excessive.

4. Appareil de commande (100), permettant de commander la charge et la décharge d'une batterie (300), selon l'une quelconque des revendications 1 à 3, lequel appareil de commande (100) est apte à recevoir une alimentation en puissance électrique depuis le réseau d'alimentation électrique commercial (200) et/ou depuis la batterie (300), et
dans lequel, lors d'une interruption de l'alimentation en puissance électrique de l'appareil de commande (100) depuis le réseau d'alimentation électrique commercial (200) et lorsque le taux de capacité restante de la batterie (300) est inférieur ou égal au premier taux de réglage et lorsque la tension de la batterie (300) est inférieure ou égale à une troisième tension de réglage, qui est plus faible que la première tension de réglage, l'unité d'évitement de décharge excessive (40) éteint l'appareil de commande (100) et la batterie (300).

5. Appareil de commande (100), permettant de commander la charge et la décharge d'une batterie (300), selon l'une quelconque des revendications 1 à 4, comportant en outre une unité de réception (50) configurée pour recevoir, de la part d'un utilisateur, une instruction de charge de la batterie (300),
dans lequel l'unité d'évitement de décharge excessive (40) assure la commande d'évitement de décharge excessive indépendamment de l'instruction reçue de la part de l'utilisateur par l'unité de réception (50).

6. Appareil de commande (100), permettant de commander la charge et la décharge d'une batterie (300), selon l'une quelconque des revendications 1 à 5, dans lequel la batterie (300) est un élément lithium-ion.
